# EUROPÄISCHE PATENTSCHRIFT

(11) **EP 2 258 462 B1**
(45) Veröffentlichungstag und Bekanntmachung des Hinweises auf die Patenterteilung: **28.09.2011**
(21) Anmeldenummer: 09007453.5
(22) Anmeldetag: 05.06.2009
(51) Int. Cl.: B01D 53/50

(54) **Wäscherturm und zugehörige Rauchgasreinigungsvorrichtung**
Washer tower and accompanying exhaust gas purification device
Laveur et dispositif de nettoyage de gaz de fumées correspondant

(43) Veröffentlichungstag der Anmeldung: 08.12.2010
(73) Patentinhaber: AE & E Lentjes GmbH, 40880 Ratingen (DE)
(72) Erfinder: Pelkman, Aat, 59172 Kamen (DE)
(74) Vertreter: Becker, Thomas

(56) Entgegenhaltungen:
- EP-A- 0 691 156
- EP-A- 0 702 996
- DE-A1- 19 808 146
- US-A- 5 603 909
- US-B1- 6 203 598

## Beschreibung

Die Erfindung betrifft einen Wäscherturm einer Rauchgasreinigungsvorrichtung sowie eine Rauchgasreinigungsvorrichtung mit einem entsprechenden Wäscherturm.

Speziell bezieht sich die Erfindung auf einen Wäscherturm beziehungsweise eine Rauchgasreinigungsvorrichtung unter Verwendung von Seewasser als Absorbens. Die Erfindung schließt aber solche Anlagen ein, die andere basische Absorptionsmittel verwenden, beispielsweise Kalkmilch. Der Stand der Technik und die Erfindung werden nachstehend der Einfachheit halber für Anlagen mit Seewasser-Absorptions-Flüssigkeit dargestellt. Bekannte Wäscher sind im Wesentlichen wie folgt aufgebaut:

Das Rauchgas, welches beispielsweise von einem Kraftwerk stammt, wird am unteren Ende des Wäscherturms in den Wäscherturm eingeleitet und nach oben zu einem Rauchgasauslass geführt. Entlang dieses Weges durch den Wäscherturm wird das Rauchgas im Gegenstrom mit flüssigem Absorptionsmittel in Kontakt gebracht. Dazu sind üblicherweise in verschiedenen Ebenen des Wäscherturms Düsen angeordnet, über die das Absorbens feinteilig versprüht wird, um eine möglichst große Reaktionsfläche mit dem zu reinigenden Rauchgas bereitzustellen.

Die Absorptionsflüssigkeit (Waschflüssigkeit), die im Wesentlichen aus Seewasser bestehen kann, enthält Stoffe, die unter anderem Schwefeloxide aus dem Rauchgas binden beziehungsweise chemisch umwandeln. Eine solche Reinigungsvorrichtung ist beispielsweise aus der DE 100 58 548 A1 bekannt.

In der EP 0 691 156 A2 ist eine Rauchgasreinigungseinrichtung offenbart, bei der das Rauchgas eine erste Absorptionsstrecke im Gleichstrom und eine zweite Absorptionsstrecke im Gegenstrom zum Absorbens durchströmt.

Ausgehend von der Forderung, den Stand der Technik kontinuierlich zu verbessern, liegt der Erfindung die Aufgabe zugrunde, eine Möglichkeit aufzuzeigen, wie eine Rauchgasreinigungsvorrichtung optimiert in Hinblick auf Konstruktion und/oder Absorption und/oder verfahrenstechnische Abläufe optimiert werden kann.

Vor diesem Hintergrund lassen sich die wesentlichen Aspekte der Erfindung wie folgt zusammenfassen:

Anstelle einer unidirektionalen Absorptionsstrecke wird erfindungsgemäß eine mehrteilige Absorptionsstrecke im Wäscherturm ausgebildet. Während im Stand der Technik das Rauchgas im Wesentlichen in einer Richtung von A nach B strömt (Rauchgasstrom im Gegenstrom zum Waschflüssigkeitsstrom) ist eine mehrteilige Absorptionsstrecke im erfindungsgemäßen Sinn dadurch gekennzeichnet, dass das Rauchgas entlang mindestens eines Abschnitts in einer Richtung und entlang mindestens eines weiteren Abschnittes in einer anderen, insbesondere entgegen gesetzten Richtung durch den Wäscherturm strömt.

Vor dem Hintergrund, dass die Flüssigkeit (Seewasser), die mit dem Rauchgas in Kontakt/Reaktion gebracht wird, grundsätzlich der Gravitation folgend eine unidirektionale Strömungsrichtung (vertikal von oben nach unten) aufweist, folgt daraus, dass das zu reinigende Rauchgas entlang mindestens eines Abschnittes der Absorptionsstrecke im Gleichstrom mit dem Absorbens und entlang mindestens eines weiteren Abschnittes der Absorptionsstrecke in Gegenstrom mit dem Absorbens in Kontakt gebracht wird.

Ausgehend von einer definierten Höhe des Wäscherturms ermöglicht die beschriebene "mäanderförmige" Führung des Rauchgases einen längeren Transportweg des Rauchgases durch den Wäscherturm und damit höhere Reaktionszeiten und eine effektivere Rauchgasreinigung.

Ein weiterer Aspekt der Erfindung besteht darin, die neuartige Rauchgasführung durch den Wäscherturm zu nutzen, einen Wärmetauscher direkt am Wäscherturm anzuordnen oder in den Wäscherturm zu integrieren, um das dem Wäscherturm zugeführte Rauchgas mit dem aus dem Wäscherturm abgezogenen Rauchgas in Kontakt zu bringen und die entsprechenden Wärmemengen verfahrenstechnisch zu nutzen. Mit anderen Worten: Das in der Regel relativ warme/heiße Rauchgas (beispielsweise 150 - 300 °C) wird vor der Kontaktierung mit dem Absorbens im Wärmetauscher abgekühlt (und zwar durch das gereinigte, rückgeführte Rauchgas), beispielsweise um > 50° C oder > 80° C oder > 100° C. Damit wird die Absorptionsflüssigkeit (auf Basis von Seewasser), die mit dem Rauchgas in Kontakt gebracht wird, im Vergleich mit den genannten Anlagen gemäß Stand der Technik nicht so stark erwärmt. Dies hat verfahrenstechnische Vorteile in Bezug auf die weitere Behandlung des Absorbens vor der Rückführung ins Meer.

Das gereinigte Rauchgas, welches gegenüber dem zugeführten Rauchgas eine deutlich verringerte Temperatur aufweist, wird erfindungsgemäß vor der Einleitung in die Umgebung mit Hilfe des Wärmetauschers wieder aufgeheizt. Mit anderen Worten: Bei der Zuführung des Rauchgases in den Wäscherturm wird dem Rauchgas Wärme entzogen, die dem Rauchgas vor der Rückführung in die Atmosphäre zumindest teilweise wieder zurück übertragen wird.

Danach betrifft die Erfindung in ihrer allgemeinsten Ausführungsform einen Wäscherturm einer Rauchgasreinigungsvorrichtung mit folgenden Merkmalen:
- einem Rauchgaseinlass in den Wäscherturm,
- einem Rauchgasauslass aus dem Wäscherturm,
- Rauchgaseinlass und Rauchgasauslass sind strömungstechnisch verbunden,
- einer mehrteiligen Absorptionsstrecke für das Rauchgas zwischen Rauchgaseinlass und Rauchgasauslass, wobei
- das Rauchgas entlang mindestens eines Teils der Absorptionsstrecke im Gleichstrom und entlang mindestens eines weiteren Teils der Absorptionsstrecke im Gegenstrom mit einem zugeführten Absorbens geleitet wird,
- mindestens einem Wärmetauscher zur Wärmeübertragung zwischen dem dem Wäscherturm zugeführten Rauchgas und dem aus dem Wäscherturm abgeführten Rauchgas.

Das Absorbens ist beispielsweise ein Absorbens auf Basis Seewasser.

Üblicherweise hat der Wäscherturm, wie der Name bereits sagt, die Form eines Turms oder eines Schornsteins mit großem Querschnitt. Der Querschnitt ist grundsätzlich beliebig. Im Zusammenhang mit der Teilung der Absorptionsstrecke in Abschnitte, bei dem/denen das Rauchgas im Gleichstrom mit dem Absorbens geführt wird und bei dem/denen das Rauchgas im Gegenstrom zum Absorbens strömt, ist aus konstruktiven sowie verfahrenstechnischen Gründen ein im Wesentlichen rechteckiger, horizontaler Querschnitt des Wäscherturms vorteilhaft.

Dies gilt auch bezüglich der genannten Abschnitte der Absorptionsstrecke, die zumindest abschnittweise einen rechteckigen horizontalen Querschnitt aufweisen können. Ein solcher rechteckiger Querschnitt ermöglicht es, Sprühebenen für das flüssige Absorbens einzubauen, die eine gleichmäßige (statistische) Verteilung von Sprühdüsen oder anderen Flüssigkeitsverteilern über den gesamten Querschnitt erlauben und damit Toträume oder dergleichen vermeiden. Der Kontakt Rauchgas/Absorbens wird dabei optimiert. Darüber hinaus ist ein rechteckiger Turm grundsätzlich konstruktiv einfacher gegenüber einem runden oder ovalen Turm.

Im einfachsten Fall sind Rauchgaseinlass und/oder Rauchgasauslass am oberen Ende des Wäscherturms angeordnet, das heißt, das Rauchgas wird von oben dem Wäscherturm zugeführt, nach unten im Wäschterturm geführt, dann umgeleitet und anschließend und in entgegengesetzter Richtung wieder nach oben geführt, um schließlich am oberen Ende des Wäscherturms wieder aus diesem weggeführt. Dabei kann die Konstruktion der Absorptionsstrecke so sein, dass die Umleitung des Rauchgasstromes im Wäscher ein- oder mehrmal erfolgt.

Bei einer solchen Ausführungsform kann es vorteilhaft sein, den Wärmetauscher ebenfalls am oberen Ende des Wäscherturms anzuordnen, und zwar beispielsweise so, dass der Wärmetauscher den Rauchgasauslass und den Rauchgaseinlass verbindet. Damit ist die Bauform des Wärmetauschers besonders kompakt und der Wärmetauscher bildet den oberen Teil des Wäscherturms beziehungsweise sitzt unmittelbar auf dem oberen Ende des Wäscherturms auf. Das Rauchgas kann also direkt über eine entsprechende Zuführleitung über den Wärmetauscher dem Wäscherturm zugeführt und entlang der Absorptionsstrecke über den Wärmetauscher und einen angeschlossenen Kamin in die Umgebung zurückgeführt werden.

Die Ausbildung der Absorptionsstrecke bezüglich der Zuführung eines flüssigen Absorbens kann grundsätzlich gemäß Stand der Technik erfolgen, also beispielsweise durch die bereits erwähnten Sprühebenen mit Sprühdüsen.

Entscheidend für die erfindungsgemäße Anlage ist die Ausbildung der Absorptionsstrecke hinsichtlich der Strömungsführung für das Rauchgas und damit implizit für die strömungstechnische Rauchgasführung im Verhältnis zum Absorbens.

Das erfindungsgemäße Ziel lässt sich im einfachsten Fall dadurch erreichen, indem die Absorptionsstrecke entlang des Wäscherturms zweigeteilt wird. Bei einem Wäscherturm mit rechteckigem horizontalem Querschnitt wird die Rechteckfläche im Wesentlichen in zwei gleiche Abschnitte geteilt, wobei das Rauchgas entlang eines Abschnittes von oben nach unten und entlang des anderen Abschnittes von unten nach oben strömt. Die beiden Teile der Absorptionsstrecke verlaufen dabei vollständig oder zumindest überwiegend parallel zueinander.

Im Zusammenhang mit dem Wärmetauscher und den beschriebenen verfahrenstechnischen Vorteilen schlägt eine Ausführungsform der Erfindung vor, dass der eine Teil der Absorptionsstrecke vom Wärmetauscher vertikal nach unten verläuft und der weitere Teil der Absorptionsstrecke sich vertikal nach oben in Richtung auf den Wärmetauscher erstreckt.

Um das Absorptionsmittel aufzufangen und gegebenenfalls weiter behandeln zu können, kann unterhalb der Absorptionsstrecke ein Flüssigkeitssumpf für das Absorbens vorgesehen sein. Ein solcher Flüssigkeitssumpf ist auch bei bekannten Wäschern vorhanden. Ein wesentlicher Unterschied gegenüber bekannten Wäschern besteht darin, dass der Flüssigkeitssumpf aus mindestens zwei Teilabschnitten der Absorptionsstrecke mit Absorbens gespeist wird, nämlich mindestens einem Abschnitt, entlang dem das Rauchgas im Gleichstrom mit dem Absorbens geführt wird und mindestens einem Abschnitt, in dem das Rauchgas im Gegenstrom zum Absorbens geführt wird, welches grundsätzlich von oben nach unten strömt.

Bei der erwähnten Absorptionsstrecke mit zwei im Wesentlichen vertikal und parallel zueinander verlaufenden Abschnitten kann das Rauchgas am

Ende des einen Abschnittes in einen Bereich geführt werden, der sich über den gesamten Querschnitt des Wäscherturms erstreckt, bevor es über den weiteren Teil der Absorptionsstrecke zurückgeführt wird. Dieser Umlenkungsbereich (Raum) für das Rauchgas ist entsprechend oberhalb des Flüssigkeitssumpfes ausgebildet. Das Absorbens fällt dabei frei in den Flüssigkeitssumpf.

Der beschriebene Wäscherturm ermöglicht es, den Flüssigkeitssumpf und/oder den Wärmetauscher als Bestandteil des Wäscherturms auszubilden oder den Wärmetauscher unmittelbar oberhalb und/oder den Flüssigkeitssumpf unmittelbar unterhalb des Wäscherturms anzuordnen.

Auch hier hat ein rechteckiger Querschnitt des Wäscherturms Vorteile insoweit, als dieser rechteckige Querschnitt für den Bereich des Flüssigkeitssumpfes übernommen werden kann. Dies ist wichtig in Hinblick auf die Zuführung von frischem Seewasser in den Bereich des Flüssigkeitssumpfes (aus einer Richtung) beziehungsweise die Ableitung des Absorbens aus dem Flüssigkeitssumpf (in derselben Richtung wie die Strömungsrichtung des frischen Seewassers) in nachgeschältete Anlagenteile wie ein Belüftungsbecken für das Absorbens beziehungsweise die Mischung aus Absorbens und frischem Seewasser.

Alle Teile können dann Bestandteil eines gemeinsamen Kanalsystems sein, welches in einer Richtung vor, unter und nach dem Wäscher verläuft.

Dabei geht es insbesondere darum, den pH-Wert des Seewassers nach der Kontaktierung mit dem Rauchgas wieder auf einen Wert von circa 8 (ähnlich dem pH-Wert von frischem Seewasser) anzuheben, bevor das Seewasser in das Meer zurückgegeben wird. Dazu kann die Zuleitung von frischem Seewasser in den Bereich des Flüssigkeitssumpfes gehören.

Dies ist im Wesentlichen bekannt und wird deshalb hier nicht näher erläutert, da es für den grundsätzlichen Aufbau des neuen Wäscherturms beziehungsweise dessen Einbindung in einer Rauchgasentschwefelungseinlage unwesentlich ist.

Die Erfindung betrifft im Weiteren eine Rauchgasreinigungsanlage mit einem Wäscherturm der genannten Art.

Weitere Merkmale der Erfindung ergeben sich aus den Merkmalen der Unteransprüche sowie den sonstigen Anmeldungsunterlagen.

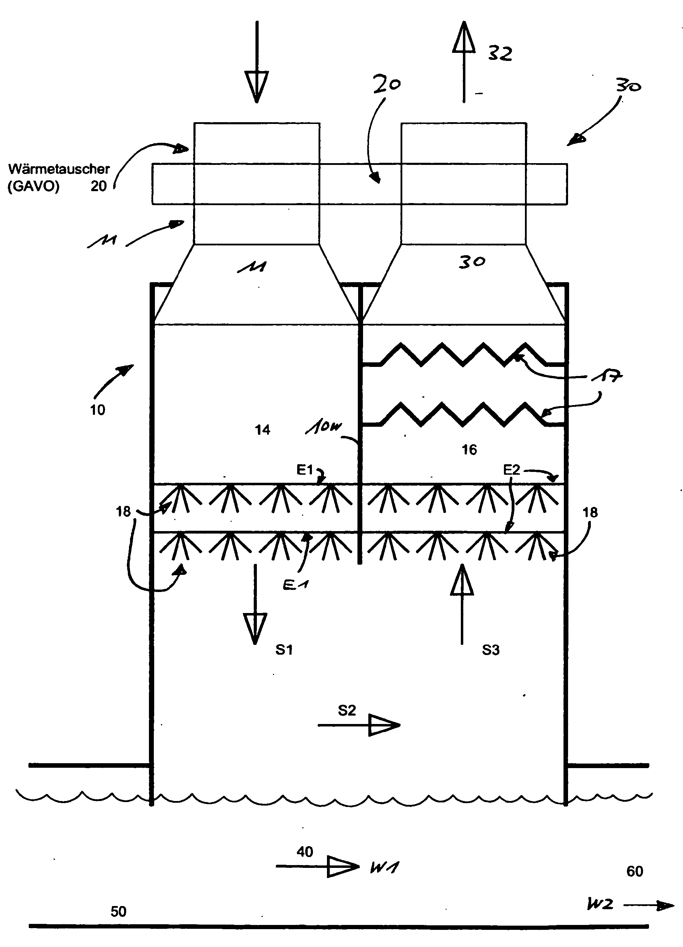

Die Erfindung wird nachstehend anhand eines Ausführungsbeispieles näher erläutert. Dabei zeigt die einzige Figur in stark schematisierter Darstellung einen vertikalen Längsschnitt durch einen erfindungsgemäßen Wäscherturm. Die zugehörige Beschreibung enthält auch allgemein gültige Merkmale, die bei anderen Ausführungsformen des Wäscherturms und einer zugehörigen Rauchgasreinigungsvorrichtung Anwendung finden können.

Der in der Figur dargestellte Wäscherturm 10 hat einen rechteckigen horizontalen Querschnitt, der durch eine vertikal verlaufende Zwischenwand 10w in zwei im Wesentlichen gleiche Teile untergliedert ist, so dass innerhalb des Wäscherturms 10 zwei Abschnitte 14, 16 einer Absorptionsstrecke parallel zueinander ausgebildet werden, entlang denen ein zu reinigendes Rauchgas durch den Wäscherturm 10 geführt wird.

Dabei erfolgt die Zuleitung des Rauchgases in den Abschnitt 14 (Rauchgaseinlass 11) von oben, wobei das heiße (hier: angenommen 180 °C) Rauchgas zurächst über einen Wärmetauscher 20 geführt wird, bei dem sich die Temperatur des Rauchgases (auf hier angenommen: circa 120 °C) abkühlt. Das Rauchgas wird im Weiteren über entsprechende, nicht dargestellte Ventilatoren, vertikal nach unten (Pfeil S1) durch den Abschnitt 14 geleitet, wo es in Kontakt mit einem Absorbens auf Basis Seewasser gebracht wird, welches über Sprühdüsen 18 im Gleichstrom mit dem Rauchgas in den Abschnitt 14 eingeleitet wird. Hierbei kühlt sich das Rauchgas weiter ab, im Extremfall bis auf die Temperatur des Absorbens.

Die Sprühdüsen 18 sind in verschiedenen Ebenen E1 (vertikal beabstandet) über den Querschnitt des Teils 14 der Absorptionsstrecke angeordnet.

Am unteren Ende des Abschnitts 14 wird das Rauchgas in Pfeilrichtung S2 umgeleitet und durchströmt den weiteren Abschnitt 16 der Absorptionsstrecke anschließend von unten nach oben (Pfeil S3). Im Abschnitt 16 sind wiederum Sprühebenen E2 mit Sprühdüsen 18 angeordnet, wobei hier die Kontaktierung von Rauchgas und Absorbens jedoch im Gegenstrom erfolgt.

Im weiteren Verlauf wird der Rauchgasstrom durch einen 2-stufigen Tropfenabscheider 17 geführt, damit nur weitestgehend trockenes Rauchgas in den Wärmetauscher 20 gelangt.

Am oberen Ende der Strecke 16 (Rauchgasauslass 30) wird das Rauchgas schließlich durch diesen Wärmetauscher 20 in einen Kamin 32 geleitet und von dort in die Umgebungsatmosphäre abgegeben.

Während das abgekühlte Rauchgas vor der Einleitung in die Umgebungsatmosphäre beispielsweise wieder auf 80 °C aufgeheizt wird, hat das in Kontakt mit dem Absorbens tretende Rauchgas durch die vorherige Abkühlung im Wärmetauscher 20 eine deutlich geringere Temperatur im Vergleich zum Stand der Technik ohne Wärmetauscher. Dadurch wird das Absorbens selbst deutlich weniger erwärmt, bevor es in einen Flüssigkeitssumpf 40 am unteren Ende des Wäscherturms 10 gelangt.

Der Kanals 50, der sich von einem Bereich links des Wäscherturms 10 in einen Bereich rechts des Wäscherturms 10 erstreckt schließt dabei den dazwischen liegenden Flüssigkeitssumpf ein.

Von links (Pfeilrichtung W1) erfolgt die Zufuhr von frischem Seewasser, so dass im Bereich des Flüssigkeitssumpfes 40 eine Anhebung des pH-Wertes des verbrauchten Seewassers von beispielsweise 4,5 auf 6 möglich wird, bevor das Seewasser in ein Belüftungsbecken geleitet wird, welches schematisch mit dem Bezugszeichen 60 angedeutet ist. Hier erfolgt eine Aufoxidierung sulfitischer Bestandteile der Flüssigkeit in Sulfat, bevor das Seewasser in das Meer (Pfeil W2) zurückgeführt wird.

Die erfindungsgemäße Anlage weist eine kompakte Bauweise auf. Sie ermöglicht hohe Verweilzeiten des Rauchgases im Wäscherturm und damit große Reaktionszeiten und günstige Absorptionswerte.

Die rechteckige Querschnittsform des Wäscherturms kann bis in das Fundament fortgeführt werden. Dies gibt dem Wäscherturm insgesamt eine hohe Stabilität und ermöglicht es besonders vorteilhaft, den genannten Flüssigkeitssumpf in ein Kanalsystem unterhalb des Wäscherturms beziehungsweise im unteren Bereich des Wäscherturms einzubinden.

Durch die Verwendung eines Wärmetauschers lässt sich die Temperatur des zu behandelnden Rauchgases deutlich herabsetzen und damit eine unerwünschte Erwärmung des Absorbens vermeiden.

## Patentansprüche

1. Wäscherturm einer Rauchgasreinigungsvorrichtung mit folgenden Merkmalen:
1.1 einem Rauchgaseinlass (11) in den Wäscherturm (10),
1.2 einem Rauchgasauslass (30) aus dem Wäscherturm (10),
1.3 Rauchgaseinlass (11) und Rauchgasauslass (30) sind strömungstechnisch verbunden,
1.4 einer mehrteiligen Absorptionsstrecke für das Rauchgas zwischen Rauchgaseinlass (11) und Rauchgasauslass (30), wobei
1.5 das Rauchgas entlang mindestens eines Teils (14) der Absorptionsstrecke im Gleichstrom und entlang mindestens eines weiteren Teils (16) der Absorptionsstrecke im Gegenstrom mit einem zugeführten Absorbens geleitet wird,
1.6 mindestens einem Wärmetauscher (20) zur Wärmeübertragung zwischen dem dem Wäscherturm (10) zugeführten Rauchgas und dem aus dem Wäscherturm (10) abgeführten Rauchgas.

2. Wäscherturm nach Anspruch 1, bei dem der Rauchgaseinlass (11), der Rauchgasauslass (30) oder beide am oberen Ende des Wäscherturms (10) angeordnet sind.

3. Wäscherturm nach Anspruch 1, bei dem der Wärmetauscher (20) am oberen Ende des Wäscherturms (10) angeordnet ist.

4. Wäscherturm nach Anspruch 1, bei dem der Wärmetauscher (20) Rauchgaseinlass (11) und Rauchgasauslass (30)verbindet.

5. Wäscherturm nach Anspruch 1, bei dem entlang der Absorptionsstrecke Sprühdüsen (18) zur Zuführung des Absorbens abgeordnet sind.

6. Wäscherturm nach Anspruch 1, bei dem mindestens zwei Teile (14, 16) der Absorptionsstrecke parallel zueinander verlaufen.

7. Wäscherturm nach Anspruch 1, bei dem sich der eine Teil (14) der Absorptionsstrecke vom Wärmetauscher (20) vertikal nach unten erstreckt und der weitere Teil (16) der Absorptionsstrecke vertikal nach oben in Richtung Wärmetauscher (20) verläuft.

8. Wäscherturm nach Anspruch 1 mit einem unterhalb der Absorptionsstrecke (14, 16) angeordneten Flüssigkeitssumpf (40) für das Absorbens.

9. Wäscherturm nach Anspruch 8, bei dem mindestens zwei Teile (14, 16) der Absorptionsstrecke über einen oberhalb des Flüssigkeitssumpfes ausgebildeten Raum strömungstechnisch verbunden sind.

10. Wäscherturm nach Anspruch 8, dessen Flüssigkeitssumpf (40) entlang eines Flüssigkeits-Kanals (50) angeordnet ist.

11. Wäscherturm nach Anspruch 1 mit einem im Wesentlichen rechteckigen horizontalen Querschnitt.

12. Wäscherturm nach Anspruch 1, dessen Absorptionsstrecke (14, 16) zumindest abschnittweise einen rechteckigen horizontalen Querschnitt aufweist.

13. Wäscherturm nach Anspruch 1, mit einem Tropfenabscheider (17).

14. Wäscherturm nach Anspruch 13, dessen Tropfenabscheider (17) strömungstechnisch am Ende der im Gegenstrom arbeitenden Absorptionsstrecke (16) angeordnet ist.

## Claims

1. A scrubber tower of a flue gas purification device having the following features:
1.1 a flue gas inlet (11) into the scrubber tower (10),
1.2 a flue gas outlet (30) out of the scrubber tower (10),
1.3 flue gas inlet (11) and flue gas outlet (30) being connected to form a flow,
1.4 a multipart absorption section for the flue gas between flue gas inlet (11) and flue gas outlet (30), wherein
1.5 the flue gas is conducted along at least one part (14) of the absorption section in the same flow as a supplied absorbent and along at least one further part (16) of the absorption section in counter flow to a supplied absorbent,
1.6 at least one heat exchanger (20) for heat transfer between the flue gas supplied to the scrubber tower (10) and the flue gas exhausted from the scrubber tower (10).

2. The scrubber tower according to Claim 1, wherein the flue gas inlet (11), the flue gas outlet (30), or both are situated at the upper end of the scrubber tower (10).

3. The scrubber tower according to Claim 1, wherein the heat exchanger (20) is situated at the upper end of the scrubber tower (10).

4. The scrubber tower according to Claim 1, wherein the heat exchanger (20) connects flue gas inlet (11) and flue gas outlet (30).

5. The scrubber tower according to Claim 1, wherein spray nozzles (18) for supplying the absorbent are situated along the absorption section.

6. The scrubber tower according to Claim 1, wherein at least two parts (14, 16) of the absorption section run parallel to one another.

7. The scrubber tower according to Claim 1, wherein one part (14) of the absorption section extends vertically downward from the heat exchanger (20) and the further part (16) of the absorption section runs vertically upward towards the heat exchanger (20).

8. The scrubber tower according to Claim ,1 having a liquid sump (40) for the absorbent situated below the absorption section (14, 16).

9. The scrubber tower according to Claim 8, wherein at least two parts (14, 16) of the absorption section are connected to form a flow via a chamber implemented above the liquid sump.

10. The scrubber tower according to Claim 8, whose liquid sump (40) is situated along a liquid duct (50).

11. The scrubber tower according to Claim 1, having an essentially rectangular horizontal cross-section.

12. The scrubber tower according to Claim 1, whose absorption section (14, 16) at least sectionally has a rectangular horizontal cross-section.

13. The scrubber tower according to Claim 1, having a droplet separator (17).

14. The scrubber tower according to Claim 13, whose droplet separator (17) is situated in the flow at the end of the absorption section (16) operating in counter flow.

## Revendications

1. Tour de lavage d'un dispositif de nettoyage pour un gaz de fumée avec les caractéristiques suivantes :
1.1 Une entrée de gaz de fumée (11) dans la tour de lavage (10),
1.2 Une sortie de gaz de fumée (30) hors de la tour de lavage (10),
1.3 L'entrée de gaz de fumée (11) et la sortie de gaz de fumée (30) sont reliées par communication fluidique,
1.4 Une voie d'absorption en plusieurs parties pour le gaz de fumée entre l'entrée de gaz de fumée (11) et la sortie de gaz de fumée (30), où
1.5 Le gaz de fumée est guidé dans le sens du courant le long d'au moins une partie (14) de la voie d'absorption, et à contre-courant le long d'au moins une autre partie (16) de la voie d'absorption, avec un agent absorbant alimenté,
1.6 Au moins un échangeur de chaleur (20) pour la transmission de chaleur entre le gaz de fumée acheminé vers la tour de lavage (10) et le gaz de fumée évacué hors de la tour de lavage (10).

2. Tour de lavage selon la revendication 1, dans laquelle l'entrée de gaz de fumée (11), la sortie de gaz de fumée (30) ou les deux sont prévues à l'extrémité supérieure de la tour de lavage (10).

3. Tour de lavage selon la revendication 1, dans laquelle l'échangeur de chaleur (20) est installé à l'extrémité supérieure de la tour de lavage (10).

4. Tour de lavage selon la revendication 1, dans laquelle l'échangeur de chaleur (20) relie l'entrée de gaz de fumée (11) et la sortie de gaz de fumée (30).

5. Tour de lavage selon la revendication 1, dans laquelle des buses de pulvérisation (18) sont alignées le long de la voie d'absorption, pour l'alimentation de l'agent absorbant.

6. Tour de lavage selon la revendication 1, dans laquelle au moins deux parties (14, 16) de la voie d'absorption s'étendent parallèlement l'une à l'autre.

7. Tour de lavage selon la revendication 1, dans laquelle une partie (14) de la voie d'absorption s'étend verticalement vers le bas, et l'autre partie (16) de la voie d'absorption s'étend verticalement vers le haut, en direction à l'échangeur de chaleur (20).

8. Tour de lavage selon la revendication 1, avec un puits liquide (40) prévu en-dessous de la voie d'absorption (14, 16), pour l'agent absorbant.

9. Tour de lavage selon la revendication 8, dans laquelle au moins deux parties (14, 16) de la voie d'absorption sont reliées par communication fluidique, par le biais d'un espace formé au-dessus du puits liquide.

10. Tour de lavage selon la revendication 8, dont le puits liquide (40) est installé le long d'un canal à liquide (50).

11. Tour de lavage selon la revendication 1, avec une section transversale horizontale essentiellement rectangulaire.

12. Tour de lavage selon la revendication 1, dont la voie d'absorption (14, 16) présente au moins par tronçons une section transversale horizontale rectangulaire.

13. Tour de lavage selon la revendication 1, avec un séparateur de gouttes (17).

14. Tour de lavage selon la revendication 13, dont le séparateur de gouttes (17) est installé en liaison fluidique à l'extrémité de la voie d'absorption (16) fonctionnant à contre-courant.
